# NEUE EUROPÄISCHE PATENTSCHRIFT

(11) **EP 1 573 881 B2**
(45) Veröffentlichungstag und Bekanntmachung des Hinweises auf die Entscheidung über den Einspruch: **24.08.2016**
(45) Hinweis auf die Patenterteilung: 17.07.2013
(21) Anmeldenummer: 03789189.2
(22) Anmeldetag: 09.12.2003
(51) Int. Cl.: H02K 15/00, H02K 3/12

(54) **ELEKTRISCHE MASCHINE MIT WICKLUNGEN AUS LITZE**
ELECTRICAL MACHINE WITH WINDINGS CONSISTING OF LITZ WIRES
MACHINE ELECTRIQUE POURVUE D'ENROULEMENTS DE FILS TORSADES

(30) Priorität: 20.12.2002 DE 10260313
(43) Veröffentlichungstag der Anmeldung: 14.09.2005
(73) Patentinhaber: Siemens Aktiengesellschaft, 80333 München (DE)
(72) Erfinder: HETTERICH, Manfred, 91575 Windsbach (DE); LUTZ, Willi, 91639 Wolframs-Eschenbach (DE); MAUL, Gerhard, 90411 Nürnberg (DE); SENGER, Rudolf, 91257 Pegnitz (DE); VOLK, Bernhard, 90451 Nürnberg (DE)
(86) Internationale Anmeldenummer: PCT/EP2003/013968
(87) Internationale Veröffentlichungsnummer: WO 2004/059816

(56) Entgegenhaltungen:
- EP-A1- 1 115 190
- EP-B1- 1 419 315
- DE-C1- 19 846 923
- JP-A- 2002 315 247
- US-A- 4 543 708
- US-A- 4 571 822
- US-A- 5 787 567
- US-A1- 2001 011 851

## Beschreibung

DievorliegendeErfindungbetriffteineSpulefür eine elektrische Maschine mit einer Leiteranordnung, die mindestens eine Litze umfasst.

Bislang wurden Einziehwicklungen mit Runddrähten ausgeführt. Hierbei ergibt sich durch die unvermeidbaren Zwischenräume aufgrund der runden Gestalt eine relativ schlechte Nutfüllung. Die Folge davon sind verhältnismäßig schlechte elektrische Kennwerte gegenüber Flachdrahtspulen. Massive Flachdrahtspulen haben aber wiederum den Nachteil, dass sie nicht ohne weiteres in halboffene Nuten eingeträufelt werden können und dass das Material sehr starr ist, wodurch es zu großen Ausladungen im Wickelkopfbereich kommt Das Resultat hiervon ist, dass einer mit Flachspulentechnik hergestellter Elektromotor ein deutlich geringeres Drehmoment aufbringen kann gegenüber einem Elektromotor gleicher Baugröße mit kleinerem Bedarf an Wickelkopfraum.

In diesem Zusammenhang ist aus der internationalen Patentanmeldung WO 02/11268 bekannt, dass Wicklungen, deren Spulen aus Litze hergestelltsind, eine einfachere Herstellung als herkömmliche Formspulenwicklungen mit Rechteckdrähten erlauben. Die Wicklungen eignen sich unter anderem für rotierende elektrische Hochspannung- oder Niederspannungsmaschinen. Mit Hilfe rechteckig geformter Litzen lassen sich flachkant und hochkant gewickelte Spulen in unterschiedlichsten Formen herstellen.

Weiterhin ist der deutschen Patentschrift DE 198 46 923 C1 zu entnehmen, dass in die zu bewickelnden Nuten des Ständers einer elektrischen Maschine eine an sich bekannte mehrphasige Wicklung eingelegt wird. Diese Wicklung innerhalb der Nut wird aus quadratischen oder rechteckförmigen Litzenleitem gewickelt, wobei sie weitestgehend pro Spulengruppe durchgängig geschleift ausgebildet ist. Dabei erfolgt eine Direktbewicklung der Zähne in der Art und Weise, dass in der Nut zwei Spulenseiten unterschiedlicher Spulen nebeneinander oder übereinander liegen oder bei Wegfall jeder zweiten Spule in der Nut nur eine Spulenseite liegt.

Darüber hinaus ist in der deutschen Auslegeschrift DE 19 37 377 B2 ein Stator für einen Einphasen-Induktionsmotor und ein Verfahren zur Herstellung des Stators beschrieben. Bei der Herstellung wird eine Spule, nachdem sie in einer Nut angeordnet worden ist, mittels eines entsprechenden Werkzeugs zusammengepresst, das radial nach außen eine Kraft auf die Spule ausübt. Die ausgeübte Druckkraft wandelt den ursprünglich praktisch kreisförmigen Querschnitt der einzelnen Drähte in einen nichtkreisförmigen poligonalen Querschnitt um, ohne dass die Drahtisolierung beschädigt wird. Dadurch werden die Lücken zwischen den einzelnen Leitern wesentlich verkleinert und der Füllfaktorwird wesentlich vergrößert. Weiterhin ist dort beschrieben, dass die erforderliche Druckkraft bei Verwendung von isolierten Aluminiumdrähten kleiner sein kann als bei einem Kupferdraht.

Die für die elektrischen Maschinen eingesetzten Flachlitzenleiter besitzen aufgrund ihres Aufbaus und des bei der Herstellung aufgebrachten Drucks eine vorgegebene Dichte und Flexibilität. Diese Dichte und Flexibilität lassen sich jedoch nur eingeschränkt beeinflussen.

Die Aufgabe der vorliegenden Erfindung besteht somit darin, Spulen beziehungsweise Wicklungen zur Verfügung zu stellen, die einen verbesserten Wirkungsgrad einer entsprechenden elektrischen Maschine gewährleisten.

Erfindungsgemäß wird diese Aufgabe gelöst durch eine Spule für eine elektrische Maschine mit einer Leiteranordnung, die mindestens eine Litze umfasst, wobei die mindestens eine Litze im Querschnitt verformbar ausgebildet ist, so dass der Querschnitt jeder Litze oder jedes Litzenabschnitts in derLeiteranordnung der jeweils zur Verfügung stehenden Fläche angepasst ist und in der Leiteranordnung im Wesentlichen keine Hohlräume vorhanden sind.

Erfindungsgemäß ist es möglich, Wicklungen mit Leitern in Litzentechnik mit hoher Nutfüllung einzuziehen, so dass das aufwändigere, manuelle Einträufeln der Wicklungen vermieden werden kann. Femer kann durch die verformbare Litzenform ein Verklemmen der einzubringenden Leiter im Nutschlitz größtenteils verhindert werden. Im Gegensatz zu den verhältnismäßig starren Runddrähten lassen sich die verformbaren Litzen leichter aneinander vorbei durch den Nutschlitz ziehen. Dies führt zu einem größeren Einsatzbereich der Einziehtechnik und zu einer wesentlichen Qualitätserhöhung.

Darüber hinaus ist erfindungsgemäß vorgesehen eine Spule für eine elektrische Maschine mit einer Leiteranordnung, die mindestens eine Litze umfasst, wobei die mindestens eine Litze eine Vielzahl an Filamenten mit gleichen oder unterschiedlichen Querschnittsgeometrien aufweist.

Aus der Druckschrift US 2001/0011851 A1 ist ferner ein Stator eines Wechselstromgenerators bekannt, bei dem die Zahnabschnitte einen rechteckförmigen Querschnitt besitzen. In die Nuten werden Leiterdrähte mit kreisförmigem Querschnitt und Leiterdrähte mit polymorphem Querschnitt eingeträufelt. Auf diese Weise kann der Füllfaktor in den Nuten erhöht werden. Aus der Druckschrift JP 2002315247 A geht eine Spule aus Litzen hervor, welche bei der Herstellung der Spule mit einem Epoxidharz getränkt sind, um die Litzen nach der Herstellung der Spule durch Erhitzen zu härten.

Es lassensich durch den Einsatz der Einziehtechnik mit umformbaren beziehungsweise verformbaren Leitern in Litzentechnik sehr hohe Nutfüllfaktoren erreichen. Die eingesetzten, blanken oder in elastische Kunststoffmasse eingebetteten Litzen sind derart verformbar, dass sich ihr Querschnitt durch die bei üblicher Einziehtechnik aufgewandten Kräfte bereits wesentlich verformen kann. Bei Verwendung von Werkzeugen zur weiteren Verdichtung der eingezogenen Litzen lässt sich der Nutfüllfaktor weiter steigern. Derartige Werkzeuge sind neben den heute üblichen Einziehwerkzeugen Einstreiffüße, Einrollwalzen, Verdichtungsbügel und dergleichen.

Durch die bislang übliche Verwendung von Einzelleitern beziehungsweise Filamenten gleichen Querschnitts in einer Litze kann eine gewisse Dichte kaum überschritten werden und die Flexibilität der Litze ist wenig variierbar. Wenn jedoch die Filamente der Litze nicht aus vielen Runddrähten mit gleichen Leiterquerschnitten bestehen, sondern aus Drähten gleicher oder unterschiedlicher Querschnittsgeometrien (rund, dreieckig, quadratisch, mehreckig, beliebige Geometrie), kann die Dichte des Litzendrahts erhöht und auch dessen Steifigkeit beziehungsweise Flexibilität beeinflusst werden. Beispielsweise kann die Dichte einer Litze erhöht werden, wenn die einzelnen runden Filamente unterschiedliche Kreisdurchmesser besitzen. Eine Steigerung der Dichte lässt sich auch dadurch erreichen, dass beispielsweise dreieckige Filamente zwischen runde gemischt werden.

Auch die Litzendrähte selbst (Pressseile, Presslitzen) können dabei unterschiedliche Formen wie rund, dreieckig, quadratisch, mehreckig oder eine beliebige Geometrie annehmen.

Eine höhere Dichte des Litzendrahts führt z.B. in einer elektrischen Maschine zu geringeren Kupferverlusten und somit höherer Ausnutzung, geringerer Erwärmung und zu einem besseren Wirkungsgrad. Dies gilt nicht nur für den Einsatz der Litze als Leiter bei elektrischen Maschinen.

Die Steifigkeit beziehungsweise Flexibilität der Litze hatAuswirkungen beispielsweise auf die Steifigkeit beziehungsweise Flexibilität einer aus Litzendraht gefertigten Wicklung für einen elektrischen Motor im nicht eingebauten Zustand, auf der Handhaben beim Einbringen der Wicklung in die Nut und auf die Festigkeit der Wicklung und der Wickelköpfe im eingebauten Zustand. Durch die Wahl der Querschnitte der einzelnen Filamente der Litze lässt sich die Steifigkeit beziehungsweise Flexibilität in geeigneter Weise beeinflussen.

Werden die Spulen zusammenhängend gewikkelt, was durch die Litzentechnik ohne weiteres möglich ist, entfallen des Weiteren die Schaltverbindungen zwischen den Spulen einer Gruppe und den verschiedenen Spulengruppen. Außerdem können durch die Litzentechnik die Ausladungen der Wickelköpfe reduziert werden.

Die verformbaren Litzen können bereits rechteckig, quadratisch oder beliebig anders vorgeformt sein. Dadurch muss beim Einziehen der Litzen in rechteckförmige Nuten keine große Verformungsenergie mehr aufgebracht werden.

Die für das Verdichten eingesetzten Werkzeuge können gefedert oder nicht gefedert sein. Bei gefederten Werkzeugen kann die Verdichtungskraft senkrecht zu den Nuten verhältnismäßig definiert eingestellt werden.

Die vorliegende Erfindung wird nun anhand der beigefügten Zeichnungen näher erläutert, in denen zeigen:
- FIG 1: einen Querschnitt durch eine teilweise mit Runddraht gefüllte Nut gemäß dem Stand der Technik;
- FIG 2: einen Querschnitt durch eine mit quadratischen Litzen teilweise gefüllten Nutgemäßdem Stand der Technik;
- FIG 3: einen Querschnitt durch eine mit verformbaren Litzen teilweise gefüllten Nut gemäß der vorliegenden Erfindung;
- FIG 4: einen Querschnitt durch eine Nut wie in FIG 3, jedoch mit einem zusätzlich angedeuteten Verdichtungswerkzeug;
- FIG 5: einen Längsschnitt durch eine Nut, in die ein Leiter eingestreift wird;
- FIG 6: einen Querschnitt durch eine rechteckförmige Litze mit runden Einzelfilamenten unterschiedlichen Querschnitts; und
- FIG 7: einen Querschnitt durch eine rechteckförmige Litze mit Filamenten unterschiedlicher Querschnittsgeometrie.

Die nachfolgend beschriebenen Ausführungsbeispiele stellen bevorzugte Ausführungsformen dervorliegenden Erfindung dar.

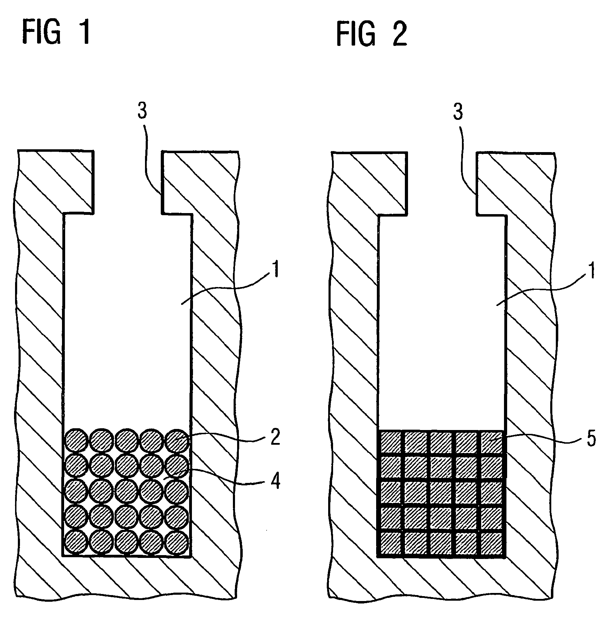

Zum besseren Verständnis der Erfindung werden im Zusammenhang mit den FIG 1 und 2 Techniken nach dem Stand der Technik erläutert.

FIG 1 zeigt einen Querschnitt durch eine Nut 1, die teilweise mit Runddrähten 2 gemäß dem Stand der Technik gefüllt ist. Die Runddrähte 2 werden durch einen Nutschlitz 3 in bekannter Weise in die Nut 1 eingezogen. Hierbei ist die Anordnung der einzuziehenden Drähte nahezu beliebig. Zwischen den Runddrähten 2 ergeben sich Zwischenräume 4 und damit eine relativ schlechte Nutfüllung.

Zur Optimierung der Nutfüllung werden bekanntermaßen gemäß FIG 2 Litzen mit quadratischen oder rechteckigen Querschnitten 5 in die Nuten 1 eingezogen oder eingeträufelt. Im Gegensatz zum Einziehen von Runddrähten, die in der Nut beliebig zu liegen kommen können, muss bei rechteckiger Litzenform der Einzeldraht in eine definierte Lage gebracht werden. Die definierte Lage im späteren Nutbereich wird dadurch erreicht, dass bereits beim Wickeln die einzelnen Drähte über Vorrichtungen geführt und an vorgegebenen Orten in der Wickelform abgelegt werden.

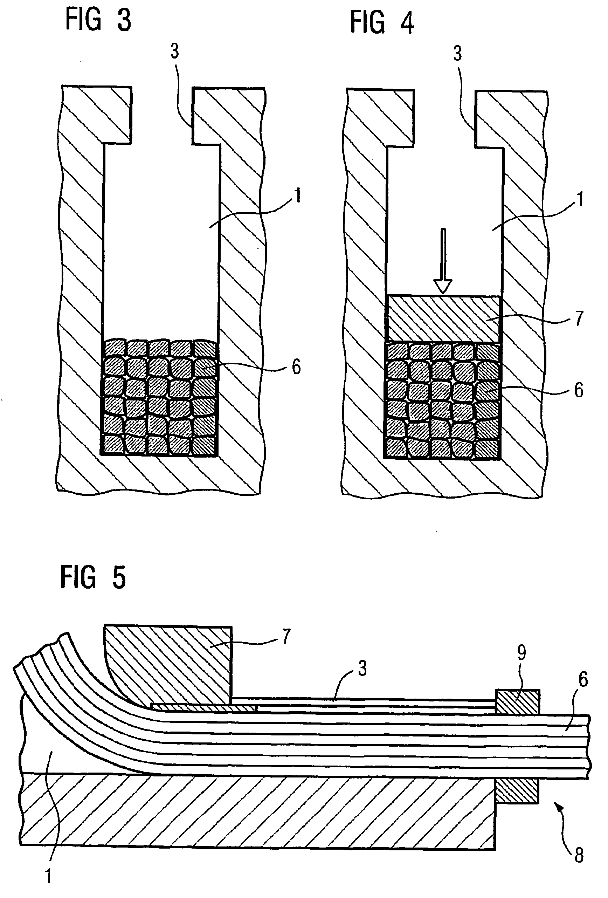

Das erfindungsgemäße Füllen einer Nut 1 mit Litzen mit verformbarem Querschnitt 6 ist in FIG 3 dargestellt. Leiter in beliebig verformbarer Litzenform können mit hierfür geeigneten Werkzeugen mit den bekannten Einziehsystemen maschinell eingezogen werden. Im Gegensatz zum Einziehen von Runddrähten ergibt sich bei beliebig verformbaren Litzen und bei beliebiger Nutform eine Füllung nahezu ohne Zwischenräume.

Die höhere Nutfüllung kann auch mit üblichen Einziehwerkzeugen erreicht werden. Aufgrund des sich beim Einziehen ergebenden Drucks, insbesondere auch in senkrechter Richtung zur jeweiligen Nut, verformen sich die umformbaren Leiter in Litzentechnik von selbst und füllen bei nahezu beliebigen Nutformen die komplette Nutfläche aus. Um die aufzubringende Verformungsenergie gering zu halten, können die Litzenleiter bereits rechteckig oder quadratisch vorgeformt sein.

Besonders vorteilhaft ist die umformbare Litze dort einzusetzen, wo sich eine Nut beispielsweise nicht lückenlos mit quadratischen Litzenleitern vorgegebenen Querschnitts füllen lässt. Entspricht beispielsweise die Nutbreite nicht einem Vielfachen der Breite einer Einzellitze, so würde bei nicht verformbaren Litzen ein Spalt in der Nut nicht gefüllt werden können. Bei im Querschnitt verformbaren Litzen 6 jedoch lässt sich auch ein derartiger Spalt füllen. Damit können für beliebige Nutquerschnitte sehr hohe Nutfüllfaktoren erzielt werden.

Um die verformbaren Litzen 6 in der Nut 1 noch stärker als durch das reine Einziehen in die Nut zu komprimieren, können geeignete Werkzeuge 7 verwendet werden. Dies ist in FIG 4 angedeutet. Das Werkzeug 7 übt auf die bereits in die Nut 1 eingelegten Litzen 6 eine Kraft in Richtung des Nutgrunds aus. Ein derartiges Werkzeug kann zum maschinellen Einziehen mit bekannten Einziehsystemen verwendet werden. Als Werkzeuge hierfür eignen sich Einstreiffüße, Einrollwalzen, Verdichtungsbügel und dergleichen. Die Werkzeuge können je nach Bedarf gefedert oder ungefedert sein.

Das Einstreifen eines aus mehreren Litzen 6 bestehenden Leiters 8 in die Nut 1 ist in FIG 5 angedeutet. Der Leiter beziehungsweise die Spule 8 wurde bereits auf einer Schablone vorgefertigt. Hierzu wurde sie vor Entnahme aus der Schablone in ihrer Querschnittsform im Nutbereich mit mindestens einem festen, flexiblen oder einstellbaren Formstück 9 fixiert. Dieses Formstück 9 hält die Spule 8 beim Einstreifen in den Nutschlitz 3 zumindest am Nuteingang in Form. Darüber hinaus gewährleisten die Formstücke 9 eine definierte oder zumindest annähernd definierte Ablage der verformbaren Leiter 8 in der Nut 1.

Das Einstreifwerkzeug 7 drückt die Spule 8 unter den Nutschlitz 3 auf den Nutgrund. Dabei passt sich der Querschnitt jeder Litze 6 beziehungsweise des Leiters 8 an den Querschnitt der Nut 1 an. Das Werkzeug 9, das sich längs der Nut vom Nuteingang zum Nutausgang bewegt, kann in der Höhe starr, gefedert oder flexibel sein. Bei Mehrfachspulen muss das Werkzeug 7 auf die jeweilige Nuthöhe beziehungsweise Befüllung angepasst werden.

Die im Querschnitt verformbaren Litzen ermöglichen ferner eine optimierte Wickelkopfgestaltung. So kann nicht nur die Ausladung der Wickelköpfe reduziert, sondern auch die Form der Wickelköpfe hinsichtlich ihrer Entwärmung optimiert werden.

Die Filamente der Litze sind in eine hochflexible, gummiartige Masse eingebettet. Im Wickelkopfbereich müssen sie daher nach der Montage entsprechend versteift werden. Die hochflexiblen und verformbaren Litzen erleichtern darüber hinaus, dass mehrere Spulen zusammenhängend gewickelt werden.

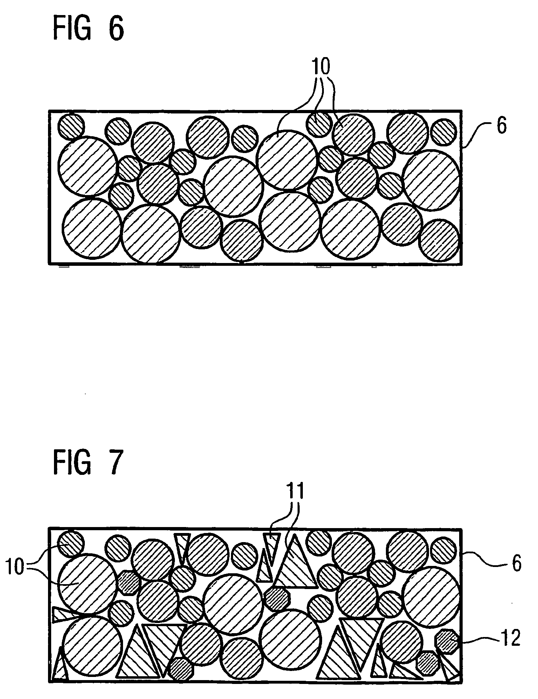

Eine weitere Ausführungsform der vorliegenden Erfindung ist in FIG 6 dargestellt. Sie zeigteine rechteckförmige Litze 6, in der mehrere Filamente 10 mit unterschiedlichen runden Durchmessern angeordnet sind. Beispielsweise kann die Litze 6 aus 50 Drähten mit Durchmesser 0,35 mm, 80 Drähten mit Durchmesser 0,5 mm und 90 Drähten mit Durchmesser 0,6 mm bestehen. Durch diese unterschiedlichen Durchmesser der einzelnen Filamente lässt sich eine verhältnismäßig hohe Dichte in der Litze 6 herstellen.

Eine Variante der Litze 6 von FIG 6 ist in FIG 7 dargestellt. Neben den Filamenten mit unterschiedlichem runden Querschnitt 10 sind in der Litze 6 auch Filamente mit dreieckigem Querschnitt 11 und Filamente mit achteckigem Querschnitt 12 untergebracht. Durch Variation der Anzahl der dreieckförmigen Filamente 11 zwischen den runden Filamenten 10 lässt sich die Steifigkeit der Litze 6 beeinflussen.

Selbstverständlich können auch Litzen ausschließlich aus polygonalen Filamenten unterschiedlicher Querschnittsgröße hergestellt werden. Außerdem ist man nicht auf die Herstellung rechteckförmiger Litzen 6 beschränkt, sondern mit den unterschiedlich geformten Filamenten können auch Litzen mit beliebigem Querschnitt gefertigt werden.

## Patentansprüche

1. Spule für eine elektrische Maschine mit
- einer Leiteranordnung (8), die mindestens eine Litze (6) umfasst,
**dadurch gekennzeichnet, dass**
- die mindestens eine Litze (6) im Querschnitt verformbar ausgebildet ist, so dass der Querschnitt jeder Litze (6) oder jedes Litzenabschnitts in der Leiteranordnung (8) der jeweils zur Verfügung stehenden Fläche angepasst ist und in der Leiteranordnung (8) im Wesentlichen keine Hohlräume vorhanden sind, wobei Filamente der Litze (6) in eine gummiartige Masse eingebettet sind.

2. Spule für eine elektrische Maschine mit
- einer Leiteranordnung (8), die mindestens eine Litze (6) umfasst,
**dadurch gekennzeichnet, dass**
- die mindestens eine Litze (6) eine Vielzahl an Filamenten mit unterschiedlichen Querschnittsgeometrien aufweist.

3. Spule nach Anspruch 2, wobei zumindest ein Filament der mindestens einen Litze einen polygonalen Querschnitt besitzt.

4. Spule nach Anspruch 2 oder 3, wobei die mindestens eine Litze Filamente mit kreisrundem Querschnitt unterschiedlichen Durchmessers besitzt.

5. Spule nach einem der Ansprüche 2 bis 4, wobei die mindestens eine Litze Filamente mit dreieckigem Querschnitt unterschiedlicher Querschnittsfläche besitzt.

6. Wicklung für eine elektrische Maschine mit einer oder mehreren Spulen nach einem der Ansprüche 1 bis 5.

7. Wicklung nach Anspruch 6, wobei mehrere Spulen zusammenhängend gewickelt sind.

## Claims

1. Coil for an electrical machine having
- a conductor arrangement (8), which comprises at least one strand (6),
**characterised in that**
- the shape of the cross section of the at least one strand (6) can be changed so that the cross section of each strand (6) or each strand segment in the conductor arrangement (8) is adapted to the respectively available area and essentially no voids are present in the conductor arrangement (8), wherein filaments of the strand (6) are embedded in a rubber-like mass.

2. Coil for an electrical machine having
- a conductor arrangement (8), which comprises at least one strand (6),
**characterised in that**
- the at least one strand (6) has a plurality of filaments with different cross-sectional geometries.

3. Coil according to claim 2, wherein at least one filament of the at least one strand has a polygonal cross section.

4. Coil according to claim 2 or 3, wherein the at least one strand has filaments having a circular cross section of different diameter.

5. Coil according to one of claims 2 to 4, wherein the at least one strand has filaments having a triangular cross section of different cross-sectional area.

6. Winding for an electrical machine having one or more coils according to one of claims 1 to 5.

7. Winding according to claim 6, wherein a plurality of coils are wound continuously.

## Revendications

1. Bobine pour une machine électrique comprenant
- un agencement (8) de conducteur, qui comprend au moins une tresse (6),
**caractérisée en ce que**
- la section transversale de la au moins une tresse (6) est déformable, de manière à ce que la section transversale de chaque tresse (6) ou de chaque tronçon de tresse soit adaptée dans l'agencement (8) de conducteur à la place disponible respectivement et de manière à ce qu'il n'y ait sensiblement pas d'espace vide dans l'agencement (8) de conducteur, des filaments de la tresse (6) étant incorporés dans une masse de type caoutchouc ou viscoélastique.

2. Bobine pour une machine électrique comprenant
- un agencement (8) de conducteur, qui comprend au moins une tresse (6),
**caractérisée en ce que**
- la au moins une tresse (6) a une pluralité de filaments ayant des géométries de section transversale différentes.

3. Bobine suivant la revendication 2, dans laquelle au moins un filament de la au moins une tresse a une section transversale polygonale.

4. Bobine suivant la revendication 2 ou 3, dans laquelle la au moins une tresse a des filaments de section transversale circulaire de diamètre différent.

5. Bobine suivant l'une des revendications 2 à 4, dans laquelle la au moins une tresse a des filaments de section transversale triangulaire de surface de section transversale différente.

6. Enroulement pour une machine électrique ayant une bobine ou plusieurs bobines suivant l'une des revendications 1 à 5.

7. Enroulement suivant la revendication 6, dans lequel plusieurs bobines sont enroulées de manière contiguë.
